# EUROPÄISCHE PATENTANMELDUNG

(11) **EP 1 983 319 A1**
(43) Veröffentlichungstag der Anmeldung: **22.10.2008**
(21) Anmeldenummer: 07008142.7
(22) Anmeldetag: 20.04.2007
(51) Int. Cl.: G01K 3/00, H01H 37/00

(54) **Temperaturerfassungsvorrichtung**

(71) Anmelder: SIEMENS AKTIENGESELLSCHAFT, 80333 München (DE)
(72) Erfinder: Meinke, Martin, 92224 Amberg (DE)

(57) **Zusammenfassung**

Die Erfindung betrifft eine Temperaturerfassungsvorrichtung (6) zum Signalisieren eines Auslösezustands umfassend genau zwei Anschlüsse (13), ein erstes Temperaturelement (11, 14; 15), um unterhalb einer Vorwarnauslösetemperatur (t1) einen ersten Widerstandswert und bei oder oberhalb der Vorwarnauslösetemperatur (t1) einen zweiten Widerstandswert bereitzustellen, und ein zweites Temperaturelement (12), um unterhalb einer Auslösetemperatur (t2) einen dritten Widerstandswert und bei oder oberhalb der Auslösetemperatur (t2) einen vierten Widerstandswert bereitzustellen, wobei das erste (11, 14; 15) und das zweite Temperaturelement (12) in Reihe zwischen die zwei Anschlüsse (13) geschaltet sind, wobei die Auslösetemperatur (t2) größer ist als die Vorwarnauslösetemperatur (t1).

## Beschreibung

Die Erfindung betrifft eine Temperaturerfassungsvorrichtung insbesondere zur Überwachung der Temperatur eines Motors zum Erkennen von Überlastzuständen.

Bei einem Motorsystem mit einer Motoransteuerung und einem Motor kann in der Motoransteuerung eine Auswerteeinheit vorgesehen sein. Die Auswerteinheit ist mit einer in dem Motor angeordneten Temperaturerkennungsvorrichtung verbunden, um bei Überschreiten einer Auslösetemperatur im Motor eine Abschaltung des Motorbetriebs zu bewirken. Die Verbindung zwischen der Temperaturerfassungsvorrichtung und der Auswerteeinheit macht den Einsatz von Elementen zur galvanischen Trennung zwischen Temperaturerkennungseinheit und der Auswerteeinheit notwendig, die z.B. über einen Spannungswandler oder über Optokoppler realisiert wird.

Häufig ist es zweckmäßig, dass vor dem Auslösen, d.h. vor dem Abschalten des Motors durch die Auswerteeinheit eine Vorwarnstufe realisiert ist, die Maßnahmen ermöglicht, ein bevorstehendes Abschalten des Motors vorzubereiten bzw. zu vermeiden. Dazu können Systeme vorgesehen werden, bei denen eine Temperaturerfassungsvorrichtung zwei oder mehr unterschiedliche Temperatursignale auswertet, die z.B. bei einer Auslösevorwarntemperatur und bei einer Auslösetemperatur generiert werden.

Dies kann z.B. realisiert werden, indem zwei Temperaturfühler in der Temperaturerfassungsvorrichtung vorgesehen werden. Um die entsprechenden Signale der Auswerteeinheit bereitstellen zu können, ist die Temperaturerfassungsvorrichtung mithilfe von drei Leitungen mit der Auswerteeinheit verbunden, um dort entsprechend das Erreichen bzw. das Überschreiten der zwei verschiedenen Temperaturwerte detektieren zu können. Dies erfordert jedoch weiterhin das Vorsehen von zwei Optokopplern, um die Temperaturfühler von der Auswerteschaltung galvanisch zu trennen.

Es ist daher eine Aufgabe der vorliegenden Erfindung, eine Temperaturerfassungsvorrichtung für einen thermischen Überlastschutz zur Verfügung zu stellen, bei der eine zwei- oder mehrstufige Erfassung der Umgebungstemperatur mithilfe einer örtlich getrennten Auswerteeinheit möglich ist, und bei der die Anzahl der Verbindungsleitungen mit der Auswerteeinheit reduziert ist.

Diese Erfindung wird durch eine Temperaturerfassungsvorrichtung gemäß Anspruch 1 sowie durch ein Motorsystem bzw. ein Verfahren zum Signalisieren eines Vorwarnauslösezustands und eines Auslösezustands gemäß den nebengeordneten Ansprüchen gelöst. Weitere vorteilhafte Ausgestaltungen der Erfindung sind in den abhängigen Ansprüchen angegeben.

Gemäß einem ersten Aspekt der Erfindung ist eine Temperaturerfassungsvorrichtung zum Signalisieren eines Auslösezustands vorgesehen. Die Temperaturerfassungsvorrichtung umfasst genau zwei Anschlüsse, ein erstes Temperaturelement, um unterhalb einer Vorwarnauslösetemperatur einen ersten Widerstandswert und bei oder oberhalb der Vorwarnauslösetemperatur einen zweiten Widerstandswert bereitzustellen, und ein zweites Temperaturelement, um unterhalb einer Auslösetemperatur einen dritten Widerstandswert und bei oder oberhalb der Auslösetemperatur einen vierten Widerstandswert bereitzustellen. Das erste und das zweite Temperaturelement sind in Reihe zwischen die zwei Anschlüsse geschaltet. Weiterhin ist die Auslösetemperatur größer als die Vorwarnauslösetemperatur.

Die vorgeschlagene Temperaturerfassungsvorrichtung ermöglicht die Detektion von mehreren Temperaturzuständen, so dass eine Vorwarnstufe bei Erreichen einer Vorwarnauslösetemperatur, die unterhalb einer Auslösetemperatur liegt, realisiert werden kann. Die wird vorteilhaft erreicht, indem zwei Temperaturelemente für die Vorwarnauslösetemperatur bzw. die Auslösetemperatur vorgesehen werden, die so in Reihe verschaltet sind, dass keine zusätzlichen Verbindungsleitungen zwischen der Temperaturerfassungsvorrichtung und einer entsprechenden Auswerteeinheit notwendig sind. Wie bei der Verwendung von nur einem Temperaturelement benötigt die erfindungsgemäße Temperaturerfassungsvorrichtung ebenfalls nur zwei Verbindungsleitungen um die drei Temperaturbereiche voneinander zu unterscheiden.

Weiterhin kann das erste Temperaturelement einen ersten Schwellwertschalter und ein dazu parallel geschaltetes Widerstandsbauelement aufweisen, wobei der erste Schwellwertschalter unterhalb der Vorwarnauslösetemperatur geschlossen ist und bei oder oberhalb der Vorwarnauslösetemperatur geöffnet ist. Insbesondere kann das Widerstandsbauelement einen elektrischen Widerstand aufweisen, der dem zweiten Widerstandswert entspricht. Durch die Parallelschaltung wird in vorteilhafter Weise ein Temperaturelement geschaffen, dessen zweiter Widerstandswert genau eingestellt werden kann.

Gemäß einer weiteren Ausführungsform kann das erste Temperaturelement einen Thermistor aufweisen oder als ein solcher ausgebildet sein, wobei der Thermistor unterhalb der Vorwarnauslösetemperatur den ersten Widerstandswert aufweist und bei oder oberhalb der Vorwarnauslösetemperatur den zweiten Widerstandswert aufweist. Insbesondere kann der Thermistor als ein PTC-Widerstand mit einer Sprungtemperatur ausgebildet sein, die der Vorwarnauslösetemperatur entspricht, wobei der erste Widerstandswert kleiner ist als der zweite Widerstandswert. Dadurch lässt sich der bauliche Aufwand der Temperaturerfassungsvorrichtung reduzieren, da wenige Bauelemente benötigt werden.

Weiterhin kann das zweite Temperaturelement einem zweiten Schwellwertschalter entsprechen, wobei der zweite Schwellwertschalter unterhalb der Auslösetemperatur, die größer ist als die Vorwarnauslösetemperatur, geschlossen ist und bei oder oberhalb der Auslösetemperatur geöffnet ist.

Alternativ kann das zweite Temperaturelement einen Thermistor aufweisen oder als ein solcher ausgebildet sein, wobei der Thermistor unterhalb der Auslösetemperatur den dritten Widerstandswert aufweist und bei oder oberhalb der Auslösetemperatur einen vierten Widerstandswert aufweist.

Vorzugsweise können der erste, zweite, dritte und vierte Widerstandswert voneinander verschieden sein. Durch vier verschiedene Widerstandswerte lassen sich als Gesamtwiderstände der Reihenschaltung drei Widerstandswerte realisieren, um verschiedene Temperaturbereiche zu unterscheiden. Alternativ können der erste und dritte Widerstandswert im Wesentlichen dem Widerstand eines geschlossenen Schalters bzw. im Wesentlichen 0 Ohm entsprechen. Dies ist einfach zu realisieren, ohne dass die Fähigkeit zur Erkennung des Temperaturbereichs beeinträchtigt wird.

Gemäß einem weiteren Aspekt ist ein Motorsystem vorgesehen. Das Motorsystem umfasst einen Motor, eine obige Temperaturerfassungsvorrichtung, die an oder in dem Motor angeordnet ist, um die Motortemperatur zu detektieren, sowie eine Motoransteuereinheit mit einer Auswerteinheit, die mit der Temperaturerfassungsvorrichtung verbunden ist. Die Auswerteinheit ist ausgebildet, um anhand des elektrischen Widerstands der Temperaturerfassungsvorrichtung ein Vorwarnauslösesignal zu generieren, wenn erkannt wird, dass die Vorwarnauslösetemperatur erreicht oder überschritten ist, und um anhand des elektrischen Widerstands der Temperaturerfassungsvorrichtung ein Auslösesignal zu generieren, wenn erkannt wird, dass die Auslösetemperatur erreicht oder überschritten ist.

Weiterhin kann bei Vorliegen des Vorwarnauslösesignals eine Signaleinrichtung aktiviert werden, um auf einen bevorstehenden Auslösezustand, der durch das Auslösesignal angezeigt wird, hinzuweisen.

Gemäß einem weiteren Aspekt der Erfindung ist ein Verfahren zum Signalisieren eines Vorwarnauslösezustands und eines Auslösezustands vorgesehen. Das Verfahren umfasst das Messen eines elektrischen Widerstandes einer obigen Temperaturerfassungsvorrichtung, das Generieren eines Vorwarnauslösesignals abhängig von dem elektrischen Widerstand der Temperaturerfassungsvorrichtung, und das Generieren eines Auslösesignals abhängig des elektrischen Widerstands der Temperaturerfassungsvorrichtung.

Bevorzugte Ausführungsformen der Erfindung werden nachfolgend anhand der beigefügten Zeichnungen näher erläutert. Es zeigen:
- FIG 1: ein Motorsystem mit einem Motor und einer Motoransteuerung, in dem eine Temperaturerfassungsvorrichtung gemäß der vorliegenden Erfindung verwendbar ist;
- FIG 2: eine schematische Darstellung einer Temperaturerfassungsvorrichtung gemäß einer ersten Ausführungsform der Erfindung;
- FIG 3: eine Temperaturerfassungsvorrichtung gemäß einer zweiten Ausführungsform der Erfindung.

Gleiche Bezugszeichen in den nachfolgend ausführlich beschriebenen Figuren entsprechen Elementen gleicher oder vergleichbarer Funktion.

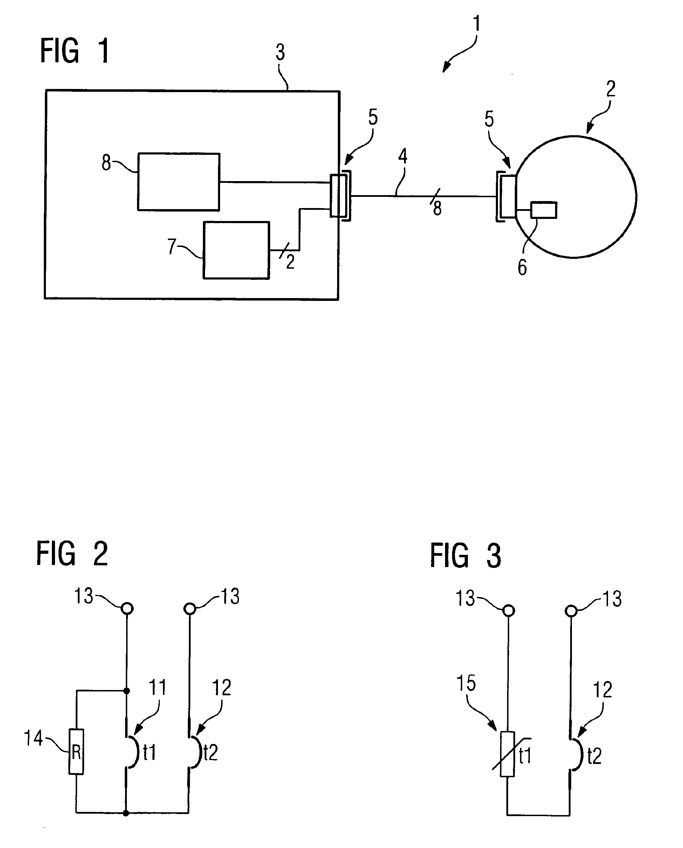

FIG 1 zeigt eine schematische Darstellung eines Motorsystems 1 mit einem Motor 2 und einer Motoransteuereinheit 3. Der Motor 2 und die Motoransteuereinheit 3 sind miteinander über ein mehradriges Verbindungskabel 4 mithilfe geeigneter Steckverbinder 5 verbunden. Der Motor 2 kann als ein beliebiger Elektromotor ausgebildet sein. Die Motoransteuereinheit 3 weist eine Treiberschaltung 8 auf, über die elektrische Energie in Form einer gesteuerten Spannung, einer pulsweitenmodulierten Spannung oder dergleichen zum Ansteuern des Motors 2 bereitgestellt werden kann. Über das Verbindungskabel 4 steht eine in dem Motor 2 befindliche Temperaturerfassungsvorrichtung 6 mit einer Auswerteeinheit 7 in der Motoransteuereinheit 3 in elektrischer Verbindung. Die Temperaturerfassungsvorrichtung 6 detektiert die in dem Motor 2 herrschende Temperatur und ermöglicht das Erkennen eines Erreichens und Überschreitens einer Auslösevorwarntemperatur und des Erreichens und Überschreitens einer Auslösetemperatur. Die Temperaturerfassungsvorrichtung 6 ist über zwei Verbindungsleitungen des Verbindungskabels 4 mit der Auswerteeinheit 7 verbunden.

In FIG 2 ist eine erste Ausführungsform einer Temperaturerfassungsvorrichtung 6 gemäß der vorliegenden Erfindung schematisch dargestellt. Die Temperaturerfassungsvorrichtung 6 umfasst einen ersten Schwellwertschalter 11 als erstes Temperaturelement und einen zweiten Schwellwertschalter 12 als zweites Temperaturelement. Der erste Schwellwertschalter 11 stellt unterhalb einer vorbestimmten Temperatur T1 einen geschlossenen Schalter dar, dessen elektrischer Widerstand nahezu 0 Ohm beträgt. Beim Erreichen bzw. Überschreiten der ersten Schwellentemperatur t1 öffnet der erste Schwellwertschalter 11, sodass dessen elektrischer Widerstand sehr hochohmig und idealerweise unendlich wird. Der zweite Schwellwertschalter 12 hat eine gleiche Funktionalität bei einer zweiten Schwellentemperatur t2. D.h., unterhalb der zweiten Schwellentemperatur t2 ist der zweite Schwellwertschalter 12 geschlossen und bei Erreichen bzw. Überschreiten der zweiten Schwellentemperatur t2 öffnet der zweite Schwellwertschalter 12.

Die beiden Schwellwertschalter 11, 12 sind zwischen zwei Anschlüssen 13 als eine Reihenschaltung verbunden. Über die beiden Anschlüsse 13 ist die Temperaturerfassungsvorrichtung 6 mit der Auswerteeinheit 7 in der Motoransteuereinheit 3 verbunden. Parallel zu dem ersten Schwellwertschalter 11 ist ein Widerstandsbauelement 14 mit einem definierten elektrischen Widerstandswert R geschaltet.

Der erste und der zweite Schwellwertschalter 11, 12 sind vorzugsweise als kalibrierte Bi-Metall-Schalter, so genannten Klixons, ausgebildet, die unterhalb der Schwellentemperatur t1 bzw. t2 geschlossen sind und bei Überschreiten der jeweiligen Schwellentemperatur t1, t2 öffnen. Das Öffnen erfolgt durch das Umklappen einer Kontaktzunge.

Der erste und der zweite Schwellwertschalter 11, 12 sind so gewählt, dass die erste Schwellentemperatur t1 des ersten Schwellwertschalters 11 niedriger ist als die zweite Schwellentemperatur t2 des zweiten Schwellwertschalters 12. Bei Verwenden der Temperaturerfassungsvorrichtung 6 in dem Motor 2 kann ein Ansteigen der Umgebungstemperatur im Motor 2 festgestellt werden. Bei Ansteigen der Umgebungstemperatur über die erste Schwellentemperatur t1 löst zunächst der erste Schwellwertschalter 11 aus, sodass der zuvor zwischen den Anschlüssen 13 bestehende elektrische Widerstand von einem sehr niederohmigen Widerstand nahe 0 Ohm, der sich aus der Reihenschaltung der zwei Schwellwertschalter 11, 12 ergibt, auf den Widerstandswert R des Widerstandselements 14 ansteigt. D.h. der Strom zwischen den Anschlüssen 13 fließt nicht mehr durch den ersten Schwellwertschalter 11 sondern durch das Widerstandsbauelement 14. Das Ansteigen des Widerstandswertes auf den Widerstandswert R kann in der Auswerteeinheit 7, mit der die Temperaturerfassungsvorrichtung 6 verbunden ist, detektiert werden, und wird dort als Auslösevorwarnstufe interpretiert, die angibt, dass die Auslösetemperatur t2 bald erreicht ist.

Bei einem weiteren Ansteigen der Umgebungstemperatur im Motor 2 über die zweite Schwellentemperatur t2 öffnet auch der zweite Schwellwertschalter 12, sodass keine elektrische Verbindung zwischen den Anschlüssen 13 besteht und der elektrische Widerstand somit idealerweise unendlich wird. Dies kann ebenfalls durch die Auswerteeinheit 7 detektiert werden.

Die Auswerteeinheit 7 in der Motoransteuereinheit 3 liefert ein Vorwarnsignal, welches von der Motoransteuereinheit 3 weiterverarbeitet werden kann und/oder an eine übergeordnete Steuerung (nicht gezeigt) weitergeleitet werden kann. Zusätzlich kann eine optische Anzeige aktiviert werden, z.B. in der Weise, dass eine Vorwarn-LED (nicht gezeigt) blinkt. Auch kann die Motorbetriebsart geändert werden, indem soweit durch die Anwendung zulässig, die vom Motor aufgenommene Leistung reduziert wird, um die Wärmeerzeugung zu reduzieren. Bei Erreichen der Auslösetemperatur, d.h. der zweiten Schwellentemperatur t2, kann die Auswerteeinheit 7 die Motoransteuereinheit 3 so steuern, dass der Hauptstromkreis abgeschaltet wird. Optional können Diagnosedaten zur Abschaltursache an die übergeordnete Steuerung (nicht gezeigt) weitergeleitet werden.

In FIG 3 ist eine weitere Ausführungsform einer Temperaturerfassungsvorrichtung 6 dargestellt. Anstelle der Parallelschaltung des ersten Schwellwertschalters 11 und des Widerstandsbauelementes 14 wird ein Thermistor 15 verwendet, der in Reihe mit dem zweiten Schwellwertschalter 12 zwischen den Anschlüssen 13 geschaltet ist. Der Thermistor 15 kann beispielsweise als PTC-Element ausgebildet sein, der unterhalb der ersten Schwellentemperatur t1 sehr niederohmig ist und bei Erreichen bzw. Überschreiten der ersten Schwellentemperatur t1 sprungartig hochohmiger wird. Vorzugsweise ist der Thermistor 15 ausgebildet, dass er auf einen Widerstandswert R springt, der deutlich unterhalb einer vollständigen Unterbrechung der Leitung liegt, d.h. der durch die Auswerteinheit 7 von dem Widerstand einer reinen Leitungsverbindung zwischen den Anschlüssen 13, d.h. von etwa 0 Ohm, unterschieden werden kann.

Beim Erreichen der ersten Schwellentemperatur t1 (Sprungtemperatur des Thermistors 15) erhöht sich also der Widerstandswert der Temperaturerkennungsvorrichtung 6 sprunghaft auf den durch den Thermistor 15 vorgegebenen Widerstandswert. Bei einem weiteren Ansteigen der Umgebungstemperatur öffnet dann wie bei der ersten Ausführungsform der zweite Schwellwertschalter 12, sodass die Verbindung zwischen den Anschlüssen 13 vollständig unterbrochen ist. Dadurch kann die Auswerteeinheit 7 das Erreichen der Auslösetemperatur erkennen und die entsprechenden oben beschriebenen Funktionen durchführen oder anstoßen, wie z.B. ein Abschalten des Hauptstromkreises und das Bereitstellen von Diagnosedaten zur Abschaltursache an eine übergeordnete Schaltung.

Damit eine mehrstufige Temperaturerkennung vorgenommen werden kann, ist es notwendig, dass der erste Schwellwertschalter 11 bzw. der Thermistor 15 bei einer niedrigeren Schwellentemperatur, d.h. bei der ersten Schwellentemperatur t1, die einer Vorwarntemperatur entspricht, aktiviert wird bzw. auslöst, sodass der Gesamtwiderstand der Temperaturerfassungsvorrichtung 6 von einem sehr niederohmigen Wert bzw. 0 Ohm auf einen durch das Widerstandsbauelement 14 bzw. durch den Sprungwiderstand des Thermistors 15 bestimmten Widerstandswert ansteigt. Die zweite Schwellentemperatur t2 des zweiten Schwellwertschalters 12 ist daher so definiert, dass sie über der ersten Schwellentemperatur t1 liegt, um nicht vor dem Schalten des ersten Schwellwertschalters 11 bzw. des Thermistors 15 eine vollständige Unterbrechung des Stromkreises zwischen den Anschlüssen 13 hervorzurufen.

Alternativ kann der zweite Schwellwertschalter 12 ebenfalls als Thermistor ausgebildet sein, unabhängig davon, ob das erste Temperaturelement als Parallelschaltung des ersten Schwellwertschalters 11 und Widerstandsbauelement 14 oder als Thermistor 15 ausgebildet ist.

Es liegt innerhalb der Erfindung, die Temperaturerfassungsvorrichtung 6 derart auszubilden, dass das erste Temperaturelement 11, 14; 15 den ersten Widerstandswert unterhalb oder bei einer Vorwarnauslösetemperatur t1 und den zweite Widerstandswert erst oberhalb der Vorwarnauslösetemperatur t1 bereitstellt; und dass das zweite Temperaturelement 12 den dritten Widerstandswert unterhalb oder bei einer Auslösetemperatur t2 und den vierten Widerstandswert erst oberhalb dieser Auslösetemperatur t2 bereitstellt.

## Patentansprüche

1. Temperaturerfassungsvorrichtung (6) zum Signalisieren eines Auslösezustands umfassend:
- genau zwei Anschlüsse (13);
- ein erstes Temperaturelement (11, 14; 15), um unterhalb einer Vorwarnauslösetemperatur (t1) einen ersten Widerstandswert und bei oder oberhalb der Vorwarnauslösetemperatur (t1) einen zweiten Widerstandswert bereitzustellen; und
- ein zweites Temperaturelement (12), um unterhalb einer Auslösetemperatur (t2) einen dritten Widerstandswert und bei oder oberhalb der Auslösetemperatur (t2) einen vierten Widerstandswert bereitzustellen,
wobei das erste (11, 14; 15) und das zweite Temperaturelement (12) in Reihe zwischen die zwei Anschlüsse (13) geschaltet sind, und wobei die Auslösetemperatur (t2) größer ist als die Vorwarnauslösetemperatur (t1).

2. Temperaturerfassungsvorrichtung (6) nach Anspruch 1, wobei das erste Temperaturelement (11, 14; 15) einen ersten Schwellwertschalter und ein dazu parallel geschaltetes Widerstandsbauelement aufweist, wobei der erste Schwellwertschalter unterhalb der Vorwarnauslösetemperatur (t1) geschlossen ist und bei oder oberhalb der Vorwarnauslösetemperatur (t1) geöffnet ist.

3. Temperaturerfassungsvorrichtung (6) nach Anspruch 2, wobei das Widerstandsbauelement einen elektrischen Widerstand aufweist, der dem zweiten Widerstandswert entspricht.

4. Temperaturerfassungsvorrichtung (6) nach Anspruch 1, wobei das erste Temperaturelement (11, 14; 15) einen Thermistor (15) aufweist oder als ein solcher ausgebildet ist, wobei der Thermistor (15) unterhalb der Vorwarnauslösetemperatur (t1) den ersten Widerstandswert aufweist und bei oder oberhalb der Vorwarnauslösetemperatur (t1) den zweiten Widerstandswert aufweist.

5. Temperaturerfassungsvorrichtung (6) nach Anspruch 4, wobei der Thermistor (15) als ein PTC-Widerstand mit einer Sprungtemperatur ausgebildet ist, die der Vorwarnauslösetemperatur (t1) entspricht, wobei der erste Widerstandswert kleiner ist als der zweite Widerstandswert.

6. Temperaturerfassungsvorrichtung (6) nach einem der Ansprüche 1 bis 5, wobei das zweite Temperaturelement (12) einem zweiten Schwellwertschalter (12) entspricht, wobei der zweite Schwellwertschalter (12) unterhalb der Auslösetemperatur (t2), die größer ist als die Vorwarnauslösetemperatur (t1), geschlossen ist und bei oder oberhalb der Auslösetemperatur (t2) geöffnet ist.

7. Temperaturerfassungsvorrichtung (6) nach einem der Ansprüche 1 bis 5, wobei das zweite Temperaturelement (12) einen Thermistor aufweist oder als ein solcher ausgebildet ist, wobei der Thermistor unterhalb der Auslösetemperatur (t2) den dritten Widerstandswert aufweist und bei oder oberhalb der Auslösetemperatur (t2) den vierten Widerstandswert aufweist.

8. Temperaturerfassungsvorrichtung (6) nach einem der Ansprüche 1 bis 7, wobei der erste, zweite, dritte und vierte Widerstandswert voneinander verschieden sind.

9. Temperaturerfassungsvorrichtung (6) nach einem der Ansprüche 1 bis 7, wobei der erste und dritte Widerstandswert im Wesentlichen dem Widerstand eines geschlossenen Schalters bzw. im Wesentlichen 0 Ohm entsprechen.

10. Motorsystem umfassend:
- einen Motor (2);
- eine Temperaturerfassungsvorrichtung (6) nach einem der vorangehenden Ansprüche, die an oder in dem Motor (2) angeordnet ist, um die Motortemperatur zu detektieren; und
- eine Motoransteuereinheit mit einer Auswerteinheit, die mit der Temperaturerfassungsvorrichtung (6) verbunden ist, wobei die Auswerteinheit ausgebildet ist, um anhand des elektrischen Widerstands der Temperaturerfassungsvorrichtung (6) ein Vorwarnauslösesignal zu generieren, wenn erkannt wird, dass die Vorwarnauslösetemperatur (t1) erreicht oder überschritten ist, und um anhand des elektrischen Widerstands der Temperaturerfassungsvorrichtung (6) ein Auslösesignal zu generieren, wenn erkannt wird, dass die Auslösetemperatur (t2) erreicht oder überschritten ist.

11. Motorsystem nach Anspruch 10, wobei bei Vorliegen des Vorwarnauslösesignals eine Signaleinrichtung aktiviert wird, um auf einen bevorstehenden Auslösezustand, der durch das Auslösesignal angezeigt wird, hinzuweisen.

12. Motorsystem nach Anspruch 10 oder 11, wobei bei Vorliegen des Vorwarnauslösesignals eine Motorbetriebsart geändert wird.

13. Verfahren zum Signalisieren eines Vorwarnauslösezustands und eines Auslösezustands, mit folgenden Schritten:
- Messen eines elektrischen Widerstandes einer Temperaturerfassungsvorrichtung (6) nach einem der vorangehenden Ansprüche;
- Generieren eines Vorwarnauslösesignals zum Signalisieren des Vorwarnauslösezustands abhängig von dem elektrischen Widerstand der Temperaturerfassungsvorrichtung (6);
- Generieren eines Auslösesignals zum Signalisieren des Auslösezustands abhängig des elektrischen Widerstands der Temperaturerfassungsvorrichtung (6).
